(19) Europäisches Patentamt
European Patent Office
Office européen des brevets

(11) Veröffentlichungsnummer: **0 039 310**
**B1**

# (12) EUROPÄISCHE PATENTSCHRIFT

(45) Veröffentlichungstag der Patentschrift: **09.11.83**

(51) Int. Cl.[3]: **C 07 F 9/38**, A 01 N 57/20

(21) Anmeldenummer: **81810151.1**

(22) Anmeldetag: **23.04.81**

(54) **Phosphonomethylglycylhydroxamsäure und Salze derselben, deren Herstellung und Verwendung in herbiziden Mitteln.**

(30) Priorität: **29.04.80 CH 3302/80**

(43) Veröffentlichungstag der Anmeldung: **04.11.81 Patentblatt 81/44**

(45) Bekanntmachung des Hinweises auf die Patenterteilung: **09.11.83 Patentblatt 83/45**

(84) Benannte Vertragsstaaten: **BE CH DE FR GB IT LI NL**

(56) Entgegenhaltungen:
**DE - A - 2 152 826**
**DE - A - 2 536 149**
**US - A - 4 104 050**

(73) Patentinhaber: **CIBA-GEIGY AG, Patentabteilung Postfach, CH-4002 Basel (CH)**

(72) Erfinder: **Thummel, Rudolph C., Route d'Alle 424, CH-2892 Courgenay (CH)**
Erfinder: **Fischer, Hanspeter, Dr., Burggartenstrasse 14, CH-4103 Bottmingen (CH)**
Erfinder: **Maier, Ludwig, Dr., Im Lee 28, CH-4144 Arlesheim (CH)**

EP 0 039 310 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Phosphonomethylglycylhydroxamsäure und Salze derselben; deren Herstellung und Verwendung in herbiziden Mitteln

Die vorliegende Erfindung betrifft N-Phosphonomethylglycylhydroxamsäure und deren Salze mit herbizider Wirkung, Verfahren zu deren Herstellung sie enthaltende Mittel sowie deren Verwendung als Herbizide.

Die erfindungsgemäße neue N-Phosphonomethylglycylhydroxamsäure entspricht der Formel I

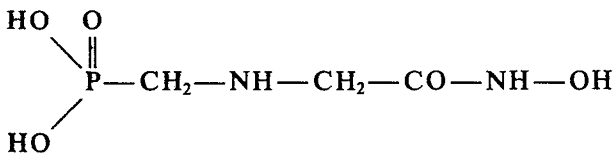

(I)

und/oder der tautomeren Formel Ia

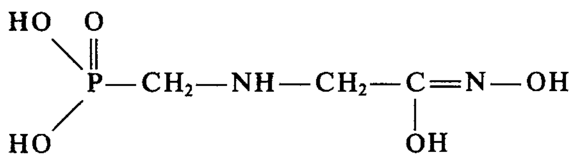

(Ia)

Die Erfindung umfaßt auch die Salze dieser Verbindung mit starken Säuren, organischen Stickstoffbasen, Alkali- oder Erdalkalimetallionen und Komplexsalze mit Aluminium oder Schwermetallverbindungen.

Beispiele für zur Salzbildung geeignete starke Säuren sind Mineralsäuren wie Salzsäure, Bromwasserstoffsäure, Jodwasserstoffsäure, Schwefelsäure, Salpetersäure, Phosphorsäure, ferner organische Säuren wie Sulfonsäuren, Halogensulfonsäuren oder Halogenessigsäuren. Die bevorzugten Säuren sind jedoch Chlor- und Bromwasserstoffsäure.

Beispiele für zur Salzbildung geeignete organische Stickstoffbasen sind primäre, sekundäre und tertiäre aliphatische und aromatische Amine wie Methylamin, Äthylamin, Propylamin, i-Propylamin, die vier isomeren Butylamine, Dodecylamin, Dimethylamin, Diäthylamin, Dipropylamin, Diisopropylamin, Di-n-butylamin, Pyrrolidon, Piperidin, Morpholin, Trimethylamin, Triäthylamin, Tripropylamin, Chinuclidin, Pyridin, Chinolin, i-Chinolin, insbesondere aber Äthyl-, Propyl-, Diäthyl- oder Triäthylamin, vor allem aber iso-Propylamin; Pyridinium-Kationen wie 1-Methyl-4,4′-bipyridinium-Kation; das 4-Pyrrolidinium-pyridinium-Dikation; sowie Tetraalkylammonium-Kationen, in denen die Alkylreste unabhängig voneinander jeweils gleiche oder voneinander verschiedene geradkettige oder verzweigte $C_1-C_{12}$-Alkylrest, vorzugsweise jedoch geradkettige Reste und den Benzylrest bedeuten.

Unter den Alkali- und Erdalkalimetallionen als Salzbildner sind Lithium, Natrium, Kalium, Magnesium oder Calcium hervorzuheben, insbesondere aber Natrium oder Kalium. Beispiele für komplexsalzbildende Schwermetalle sind Chrom, Mangan, Eisen, Nickel, Kupfer, Zink, Zinn, Quecksilber und Blei.

Bevorzugt ist die Verbindung der Formel I oder Ia als freie Säure, mono-, di- oder tri-Natriumsalz, Kupfersalz, Isopropylammoniumsalz, Tetrabutylammoniumsalz, 4-Pyrrolidinium-pyridiniumsalz, 1-Methyl-4,4′-bipyridiniumsalz, Dimethyl-benzylammoniumsalz, Dimethyl-dodecylammoniumsalz oder als Hydrohalogenid.

Unter diesen Verbindungen genießen eine weitere Bevorzugung: die freie Säure, das mono- und di-Natriumsalz, das Kupfersalz, das Isopropylammoniumsalz sowie die Hydrohalogenide.

Ganz besonders bevorzugt ist die freie Säure.

Die N-Phosphonomethylglycylhydroxamsäure der Formel I und/oder Ia wird nach an sich bekannten Methoden hergestellt.

Nach einem ersten erfindungsgemäßen Verfahren erhält man die Verbindung der Formel I oder Ia analog zu in Houben-Weyl, 4. Aufl., Methoden der organischen Chemie, 8, 684, beschriebenen Verfahren, indem man eine N-Phosphonomethylglycinverbindung der Formel II

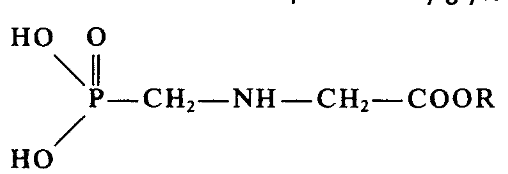

(II)

worin R Wasserstoff oder $C_1-C_4$-Alkyl bedeutet in Gegenwart einer Base mit Hydroxylamin der Formel III

$$H-O-NH_2 \qquad \text{(III)}$$

umsetzt.

Nach einem weiteren erfindungsgemäßen Verfahren können die Verbindung der Formel I oder Ia analog zu einem in J. E. Franz, Adv. in Pesticide Science, Zürich 1978, Pergamon Press, Ed. H. Geissbühler, Symp. Papers 4th int. Congr. Pest. Chem., S. 139, beschriebenen Verfahren hergestellt werden, indem man Glycylhydroxamsäure der Formel IV

$$H-O-NH-CO-CH_2-NH_2 \qquad (IV)$$

in Gegenwart von Salzsäure oder Bromwasserstoffsäure mit Formaldehyd und phosphoriger Säure erhitzt.

Nach einem weiteren erfindungsgemäßen Verfahren kann man die Verbindung der Formel I oder Ia analog zu einem in der DAS 2 152 826 beschriebenen Verfahren erhalten, indem man Glycylhydroxamsäure der Formel IV, in Gegenwart eines säurebindenden Mittels mit einer Halogenmethylphosphonsäure der Formel V

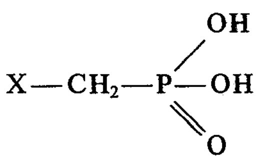

(V)

umsetzt, worin X Chlor oder Brom bedeutet.

Nach einem weiteren erfindungsgemäßen Verfahren kann man die Verbindung der Formel I oder Ia herstellen, indem man ein Halogenid der Formel VI

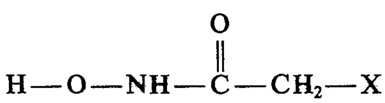

(VI)

worin X Chlor oder Brom bedeutet, in Gegenwart eines säurebindenden Mittels mit Aminomethylphosphonsäure der Formel VII

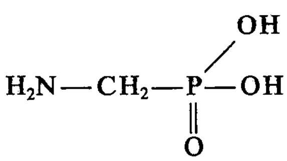

(VII)

umsetzt.

Man kann die erfindungsgemäßen Verbindungen auch erhalten, indem man nach den Angaben von J. E. Franz, Adv. in Pesticide Science, Zürich 1978, Pergamon Press, Ed. H. Geissbühler, Symp. Papers 4th int. Congr. Pest. Chem., S. 139, die phosphonige Säure der Formel VIII

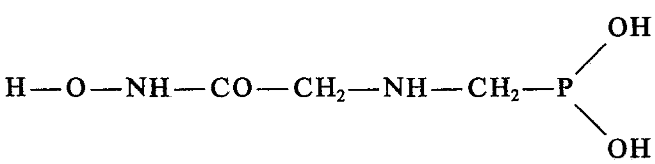

(VIII)

mit Quecksilber-II-chlorid ($HgCl_2$) oder Sauerstoff oxidiert.

Nach einem weiteren erfindungsgemäßen Verfahren können die Verbindung der Formel I oder Ia, hergestellt werden, indem man ein Hexahydrotriarin der Formel IX

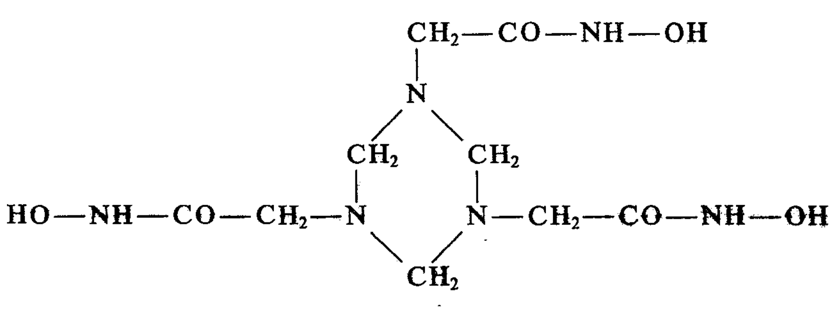

(IX)

das aus Glycylhydroxamsäure der Formel IV und Formaldehyd erhalten wird, mit Dialkylphosphiten der Formel X

$$(R'O)_2\overset{\overset{O}{\|}}{P}-H \qquad (X)$$

erhitzt und die entstehenden Phosphonsäureester der Formel XI

$$(R'O)_2\overset{\overset{O}{\|}}{P}-CH_2-NH-CH_2-CO-NH-OH \qquad (XI)$$

worin R' $C_1-C_4$-Alkyl bedeutet, hydrolysiert.

Schließlich kann man die erfindungsgemäße Verbindung der Formel I oder Ia auch erhalten, indem man ein Aminosäurederivat der Formel XII

$$H-O-NH-CO-CH_2-NH-R'' \qquad (XII)$$

worin R'' Benzyl, Benzhydryl oder Triphenylmethyl ist, in Gegenwart von Salzsäure oder Bromwasserstoffsäure mit Formaldehyd und phosphoriger Säure oder Phosphortrichlorid, das in Wasser phosphorige Säure liefert, erhitzt und nach beendigter Umsetzung die Gruppe R'' entweder mit Bromwasserstoffsäure bei erhöhter Temperatur (140—180°C) oder mit Wasserstoff in Gegenwart von katalytischen Mengen 5%iger Palladium-Kohle wieder abspaltet.

Die nach den verschiedenen Methoden herstellbaren freien Säuren der Formel I oder Ia können gegebenenfalls nach an sich bekannten Methoden in die Salze überführt werden.

Die Verwendung von N-Phosphonomethylglycin (Glyphosate), dessen Ammonium-, Alkali-, Erdalkalisalzen einigen Schwermetallsalzen, Amiden, Estern und der Phenylhydrazide sowie N-Trifluoracetyl-Derivaten als Kontaktherbizide ist aus J. E. Franz, Adv. in Pesticide Science, Zürich 1978, Pergamon Press, Ed. H. Geissbühler, Symp. Papers 4th int. Congr. Pest. Chem., S. 139; US-Pat. 3 799 758; DAS 2 152 826, Japan-Patentpublikation 79 036 653, US-Pat. 4 180 294 und EPA 7 210 bekanntgeworden.

Die geprüfte erfindungsgemäße N-Phosphonomethylglycylhydroxamsäure und deren Salze sind neu und zeigen eine hervorragende herbizide Wirksamkeit bei pre-emergenter, vor allem aber post-emergenter Anwendung.

Darüberhinaus beeinflußt die Verbindung der Formel I oder Ia das Pflanzenwachstum in verschiedener Weise. So wird beispielsweise das Wurzelwachstum von Getreidepflanzen stimuliert.

Die Verbindung der Formel I oder Ia oder deren Salze werden in unveränderter Form oder vorzugsweise als Mittel zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubungsmitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Gießen werden gleich wie die Art der Mittel den angestrebten Zielen und den gegebenen Verhältnissen entsprechend gewählt.

Die Formulierungen, d. h. die den Wirkstoff der Formel I oder Ia oder entsprechende Salze und gegebenenfalls einen festen oder flüssigen Zusatzstoff enthaltenden Mittel, Zubereitungen oder Zusammensetzungen werden in an sich bekannter Weise hergestellt, z. B. durch inniges Vermischen und/oder Vermahlen der Wirkstoffe mit Streckmitteln, wie z. B. mit Lösungsmitteln, festen Trägerstoffen, anorganischen Salzen und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokusnußöl oder Sojaöl; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder

zerkleinerte Pflanzenrückstände verwendet werden.

Als oberflächenaktive Verbindungen kommen je nach der Art des zu formulierenden Wirkstoffes nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}-C_{22}$), wie z. B. die Na- oder K-Salze der Oel- oder Stearinsäure, oder von natürlichen Fettsäuregemischen, die z. B. aus Kokusnuß- oder Talgöl gewonnen werden können. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2 Sulfonsäuregruppen und einen Fettsäurerest mit 8—22 C—Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Äthylenoxid-Adduktes in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxidaddukte an Polypyropylglykol, Äthylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Recinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie des Polyoxyäthylensorbitantrioleat in Betracht.

Bei den kationischen Tensiden handelt es sich vor allem um quartäre Ammoniumsalze, welche als N-Substituenten mindestens einen Polyglykoläther- oder Alkylrest mit 8 bis 22 C-Atomen enthalten und als weitere Substituenten niedrige, gegebenenfalls halogenierte Alkyl-, Benzyl- oder niedrige Hydroxyalkylreste oder Fettsäure aufweisen. Die Salze liegen vorzugsweise als Halogenide, Methylsulfate oder Äthylsulfate vor, z. B. das Stearyltrimethylammoniumchlorid oder das Benzyldi(2-chloräthylammoniumbromid).

Die in der Formulierungstechnik gebräuchlichen Tenside sind u. a. in folgenden Publikationen beschrieben:

»Mc Cutcheon's Detergents and Emulsifiers Annual« MC Publishing Corp., Ridegwood, New Jersey, 1979;
Sise ly and Wood, »Encyclopedia of Surface Active Agents«, Chemical Publishing Co., Inc. New York, 1964.

Als besonders zweckmäßig hat es sich bei der Formulierung des Wirkstoffs der Formel I oder Ia oder der entsprechenden Salze erwiesen, anorganische Salze, wie z. B. Natriumchlorid oder Kaliumchlorid, zuzusetzen.

Die pestiziden Zubereitungen enthalten in der Regel 0,1 bis 99%, insbesondere 0,1 bis 95%, Wirkstoff der Formel I oder Ia oder als entsprechendes Salz, 1 bis 99% eines festen oder flüssigen Zusatzstoffes und 0 bis 25%, insbesondere 0,1 bis 25% eines Tensides.

Insbesondere setzen sich bevorzugte Formulierungen folgendermaßen zusammen: (% = Gewichtsprozent)

Lösungen

| | |
|---|---|
| Aktiver Wirkstoff: | 5 bis 95%, vorzugsweise 10 bis 80% |
| Lösungsmittel: | 95 bis 5%, vorzugsweise 90 bis 0% |
| oberflächenaktives Mittel: | 1 bis 30%, vorzugsweise 2 bis 20% |

Emulgierbare Konzentrate

| | |
|---|---|
| Aktiver Wirkstoff: | 10 bis 50%, bevorzugt 10 bis 40% |
| oberflächenaktives Mittel: | 5 bis 30%, vorzugsweise 10 bis 20% |
| flüssiges Trägermittel: | 20 bis 95%, vorzugsweise 40 bis 80% |

Stäube

| | |
|---|---|
| Aktiver Wirkstoff: | 0,5 bis 10%, vorzugsweise 2 bis 8% |
| festes Trägermittel: | 99,5 bis 90%, vorzugsweise 98 bis 92% |

Suspensions-Konzentrate

| | |
|---|---|
| Aktiver Wirkstoff: | 5 bis 75%, vorzugsweise 10 bis 50% |
| Wasser: | 94 bis 25%, vorzugsweise 90 bis 30% |
| oberflächenaktives Mittel: | 1 bis 40%, vorzugsweise 2 bis 30% |

Benetzbare Pulver

| | |
|---|---|
| Aktiver Wirkstoff: | 5 bis 90%, vorzugsweise 10 bis 80% und insbesondere 20 bis 60% |
| oberflächenaktives Mittel | 0,5 bis 20%, vorzugsweise 1 bis 15% |
| festes Trägermittel: | 5 bis 90%, vorzugsweise 30 bis 70% |

Granulate

| | |
|---|---|
| Aktiver Wirkstoff: | 0,5 bis 30%, vorzugsweise 3 bis 15% |
| festes Trägermittel: | 99,5 bis 70%, vorzugsweise 97 bis 85% |

Während als Handelsware eher konzentrierte Mittel bevorzugt werden, verwendet der Endverbraucher in der Regel verdünnte Mittel. Die Anwendungsformen können bis hinab zu 0,001% an Wirkstoff verdünnt werden. Die Aufwandmengen betragen in der Regel 0,1 bis 10 kg AS/ha, vorzugsweise 0,25 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten. So können die neuen Mittel außer den genannten Verbindungen der allgemeinen Formel I oder Ia oder den Salzen z. B. Insektizide, Fungizide, Bakterizide, Fungistatika, Bakteriostatika, Nematozide oder weitere Herbizide zur Verbreiterung des Wirkungsspektrums enthalten.

In den folgenden Beispielen sind die Temperaturen in Celsiusgraden °C, die Drücke in Millibar mb angegeben.

## Herstellungsbeispiele

### Beispiel 1

N-Phosphonomethylglycin-hydroxamsäure mit 5 Mol NaCl

Eine Mischung von 10 g (0,05 Mol) N-Phosphonomethylglycinäthylester, 7 g (0,1 Mol) Hydroxylamin-hydrochlorid und 15 g (0,25 Mol) Natriummethylat in 200 ml Methanol wird nach 15 Stunden Rühren mit 30 ml 5 N methanolischer HCl-Lösung versetzt. Der Niederschlag wird abfiltriert, mehrmals mit Methanol gewaschen und getrocknet. Man erhält 5 g eines farblosen Pulvers, das sich unter Aufschäumen bei 60 bis 70° zersetzt und die Zusammensetzung von N-Phosphonomethylglycin-hydroxamsäure mit 5 Mol NaCl hat (Verbindung Nr. 1).

Analyse: $C_3H_9N_2O_5 + 5\ NaCl$

| | | | | | | |
|---|---|---|---|---|---|---|
| berechnet: | C 7,56 | H 1,98 | N 5,88 | P 6,51 | Na 24,13 | Cl 37,25 |
| gefunden: | C 7,5 | H 2,0 | N 5,6 | P 6,3 | Na 24,4 | Cl 37,3 |

Die Verbindung gibt mit Eisen-III-ionen die charakteristische Rot-Färbung der Hydroxamsäuren.

## Beispiel 2

### N-Phosphonomethylglycin-hydroxamsäure-dinatriumsalz

Zu einer Suspension von 27,5 g (0,15 Mol) N-Phosphonomethylglycinmethylester in 700 ml Methanol wird eine Lösung von 0,3 Mol Hydroxylamin in 300 ml Methanol, die man durch Zusetzen einer Lösung von 6,9 g (0,3 Grammatom) Natrium in 200 ml Methanol zur Suspension von 21 g (0,3 Mol) Hydroxylamin-hydrochlorid und Abfiltrieren des NaCl-Niederschlages erhält, zugesetzt. Zu dieser Lösung wird weiterhin eine Lösung von 6,9 g (0,3 Grammatom) Natrium in 250 ml Methanol zugesetzt, bis die Reaktionslösung gegen Phenolphthalein eine alkalische Reaktion zeigt. Nach einer Reaktionszeit von 16 Stunden wird das entstandene N-Phosphonomethylglycin-hydroxamsäuredinatriumsalz in 95% Ausbeute als kleinkristallines farbloses Pulver erhalten, welches unterhalb von 210° nicht schmilzt (Verbindung Nr. 2).

Analyse: $C_3H_7N_2Na_2O_5P$

| | | | | | | |
|---|---|---|---|---|---|---|
| berechnet: | C 15,8 | H 3,1 | N 12,3 | Na 20,2 | P 13,6 | |
| gefunden: | C 15,6 | H 3,3 | N 11,5 | Na 19,5 | P 13,0 | Cl 0,3 |

## Beispiel 3

### N-Phosphonomethylglycin-hydroxamsäure

Nach dem Lösen von 4,6 g (0,02 Mol) N-Phosphonomethylglycin-hydroxamsäure-dinatriumsalz in 40 ml wäßriger 1 N HCL-Lösung kristallisiert die N-Phosphonomethylglycin-hydroxamsäure rasch als kleinkristallines farbloses Pulver aus, welches sich bei 186°C unter Aufschäumen zersetzt. Die Ausbeute beträgt nach Waschen mit Wasser und Methanol und Trocknen im Vakuum bei 60° 90% (Verbindung Nr. 3).

Analyse: $C_3H_9N_2O_5P$

| | | | | |
|---|---|---|---|---|
| berechnet: | C 19,58 | H 4,93 | N 15,22 | P 16,83 |
| gefunden: | C 19,5 | H 5,0 | N 15,0 | P 16,8 |

## Beispiel 4

### N-Phosphonomethylglycin-hydroxamsäure-hydrochlorid

Nach dem Lösen von 4,6 g (0,02 Mol) N-Phosphonomethylglycin-hydroxamsäure-dinatriumsalz in 20 ml methanolischer 5 N HCl-Lösung und Rühren für 0,5 Stunden wird das ausgefallene NaCl abfiltriert und die Lösung im Vakuum eingedampft. Reste des Lösungsmittels werden im Hochvakuum bei 40° und 0,1 mbar entfernt. Man erhält N-Phosphonomethylglycinhydoxamsäure-hydrochlorid in 60%iger Ausbeute als klebriges Harz (Verbindung Nr. 4).

## Beispiel 5

### N-Phosphonomethylglycin-hydroxamsäure-kupfersalz

Eine wäßrige Lösung von 1,5 g N-Phosphonomethylglycin-hydroxamsäure mit 5 Mol NaCl werden mit überschüssiger Kupfer-II-acetat-Lösung versetzt. Der sofort ausfallende, blaugrüne Niederschlag wird abfiltriert, mit Wasser ausgekocht und getrocknet. Man erhält 1,3 g eines grünen Pulvers, das bis 200° nicht schmilzt und die Zusammensetzung $[(C_3H_8N_2O_5P)_2]^{2-}Cu^{2+}$ aufweist (Verbindung Nr. 5).

## Beispiel 6

### N-Phosphonomethylglycin-hydroxamsäure

1,3 g N-Phosphonomethylglycin-hydroxamsäure-kupfersalz $[(C_3H_8N_2O_5P)_2]^{2-}Cu^{2+}$ werden in 50 ml Äthanol suspendiert. Nach Sättigung der Mischung mit Schwefelwasserstoff und Rühren bei 20° für 16 Stunden, wird der schwarze Niederschlag, der aus N-Phosphonomethylglycin-hydroxamsäure und Kupfersulfid besteht, abfiltriert und getrocknet. Nach erneutem Verrühren des Niederschlages in einer Lösung von 3 g Isopropylamin in 20 ml Äthanol wird das nicht gelöste Kupfersulfid abfiltriert und aus der Lösung durch Ansäuern mit alkoholischer HCl-Lösung 1.0 g der N-Phosphonomethylglycin-hydroxamsäure als farbloses Pulver ausgefällt, welches sich bei 130 bis 135° zersetzt (Verbindung Nr. 3).

Nach der Umkristallisation aus Wasser fällt die Verbindung in farblosen Prismen an, welche einen Zersetzungspunkt von 192° aufweisen.

### Beispiel 7

N-Phosphonomethylglycin-hydroxamsäure-isopropyl-ammoniumsalz

1,7 g (0,01 Mol) N-Phosphonomethylglycin-hydroxamsäure werden in 10 ml Methanol unter Zusatz von 1,8 g (0,03 Mol) Isopropylamin gelöst. Nach dem Einengen der Lösung am Vakuum erstarrt der Rückstand zu einem glasartigen Schaum und man erhält 2,6 g des N-Phosphonomethylglycinhydroxamsäure-isopropylaminsalzes als weißes, amorphes Pulver, welches sich ab 70° zu zersetzen beginnt.

Die nach den Beispielen 1 bis 7 hergestellten Verbindungen der Formel I oder Ia, und die dementsprechenden Salze sowie weitere analog herstellbare Salze sind in der folgenden Tabelle angeführt.

| Verb. Nr. | Formel I oder Ia | Phys. Daten |
|---|---|---|
| 1 | $(HO)_2PO-CH_2-NH-CH_2-CO-NH-OH + 5\,NaCl$ | Smp. 60–70° (Zers.) |
| 2 | $[O_3P-CH_2-NH-CH_2-CO-NH-OH]^{2\ominus}\ 2\,Na^{\oplus}$ | Smp. > 210° |
| 3 | $(HO)_2PO-CH_2-NH-CH_2-CO-NH-OH$ | Smp. 192° (Zers.) |
| 4 | $(HO)_2PO-CH_2-\overset{\oplus}{N}H_2-CH_2-CO-NH-OH\ \ Cl^{\ominus}$ | Harz |
| 5 | $[(HO)_2PO-CH_2-NH-CH_2-CO-NH-O]_2^{\ominus}\ \ Cu^{2\oplus}$ | Smp. > 200° |
| 6 | $[(HO)OPO-CH_2-NH-CH_2-CONH-OH]^{\ominus}\ \ H_3\overset{\oplus}{N}-iC_3H_7$ | Smp. ab 70° (Zers.) |
| 7 | $[O_3P-CH_2-NH-CH_2-CONH-OH]^{2\ominus}$ 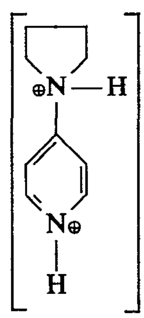 | |
| 8 | $[O_3P-CH_2-NH-CH_2-CO-NH-OH]^{2\ominus}{}_2$ 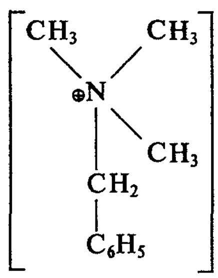 | |
| 9 | $[O_3P-CH_2-NH-CH_2-CO-NH-OH]^{2\ominus}{}_2$ 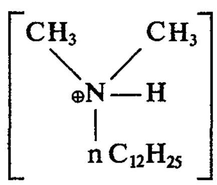 | |

Fortsetzung

| Verb. Nr. | Formel I oder Ia | Phys. Daten |
|---|---|---|
| 10 | $[(NaO)OPO-CH_2-NH-CH_2-CO-NH-OH]^{\ominus}$ 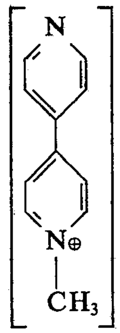 | |
| 11 | $[(HO)OPO-CH_2-NH-CH_2-CO-NH-OH]^{\ominus}$ $Na^{\oplus}$ | |
| 12 | $[O_3P-CH_2-NH-CH_2-CO-NH-O]^{3\ominus}$ $3\,Na^{\oplus}$ | |
| 13 | $[O_3P-CH_2-NH-CH_2-CONHOH]^{2\ominus}$ $2^{\oplus}N(C_4H_9)_4$ | |

Formulierungsbeispiele

Beispiel 8

Formulierungsbeispiele für flüssige Wirkstoffe der Formel I (% = Gewichtsprozent)

| a) Emulsionskonzentrate | a) | b) | c) |
|---|---|---|---|
| Wirkstoff | 20 % | 40 % | 50 % |
| Ca-Dodecylbenzolsulfonat | 5 % | 8 % | 5,8 % |
| Ricinusöl-polyäthylenglykoläther (36 Mol AeO) | 5 % | – | – |
| Tributylphenoyl-polyäthylenglykoläther (30 Mol AeO) | – | 12 % | 4.2 % |
| Cyclohexanon | – | 15 % | 20 % |
| Xylolgemisch | 70 % | 25 % | 20 % |

Aus solchen Konzentraten können durch Verdünnen mit Wasser Emulsionen jeder gewünschten Konzentration hergestellt werden.

| b) Lösungen | a) | b) | c) | d) |
|---|---|---|---|---|
| Wirkstoff | 80 % | 10 % | 5 % | 95 % |
| Aethylenglykol-monomethyl-äther | 20 % | – | – | – |
| Polyäthylenglykol M G 400 | – | 70 % | – | – |
| N-Methyl-2-pyrrolidon | – | 20 % | – | – |
| Epoxidiertes Kokosnußöl | – | – | 1 % | 5 % |
| Benzin (Siedegrenzen 160–190 °C) | – | – | 94 % | – |

Die Lösungen sind zur Anwendung in Form kleinster Tropfen geeignet.

| c) Granulate | a) | b) |
|---|---|---|
| Wirkstoff | 5 % | 10 % |
| Kaolin | 94 % | – |
| Hochdisperse Kieselsäure | 1 % | – |
| Attapulgit | – | 90 % |

Der Wirkstoff wird in Methylenchlorid gelöst, auf den Träger aufgesprüht und das Lösungsmittel anschließend im Vakuum abgedampft.

| d) Stäubemittel | a) | b) |
|---|---|---|
| Wirkstoff | 2 % | 2 % |
| Hochdisperse Kieselsäure | 1 % | 5 % |
| Talkum | 97 % | – |
| Kaolin | – | 90 % |

Durch inniges Vermischen der Trägerstoffe mit dem Wirkstoff erhält man gebrauchsfertige Stäubemittel.

Beispiel 9

Formulierungsbeispiele für feste Wirkstoffe der Formel I (% = Gewichtsprozent)

| a) Spritzpulver | a) | b) |
|---|---|---|
| Wirkstoff | 20 % | 60 % |
| Na-Ligninsulfonat | 5 % | 5 % |
| Na-Laurylsulfat | 3 % | – |
| Na-Diisobutylnaphthalinsulfonat | – | 6 % |
| Octylphenolpolyäthylenglykoläther (7–8 Mol AeO) | – | 2 % |
| Hochdisperse Kieselsäure | 5 % | 27 % |
| Kaolin | 67 % | – |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | |
|---|---|
| Wirkstoff | 10 % |
| Octylphenolpolyäthylenglykoläther (4—5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| c) Stäubemittel | a) | b) |
|---|---|---|
| Wirkstoff | 5 % | 8 % |
| Talkum | 95 % | — |
| Kaolin | — | 92 % |

Man erhält anwendungsfertige Stäubemittel, indem der Wirkstoff mit dem Träger vermischt und auf einer geeigneten Mühle vermahlen wird.

d) Extruder Granulat

| | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschließend im Luftstrom getrocknet.

e) Umhüllungs-Granulat

| | |
|---|---|
| Wirkstoff | 3% |
| Polyäthylenglykol (MG 200) | 3% |
| Kaolin | 94% |

Der fein gemahlene Wirkstoff wird in einem Mischer auf das mit Polyäthylenglykol angefeuchtete Kaolin gleichmäßig aufgetragen. Auf diese Weise erhält man staubfreie Umhüllungs-Granulate.

f) Suspensions-Konzentrat

| | |
|---|---|
| Wirkstoff | 40% |
| Äthylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wäßrige Formaldehyd-Lösung | 0,2% |
| Silikonöl in Form einer 75%igen wäßrigen Emulsion | 0,8% |
| Wasser | 32% |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Biologische Beispiele

### Beispiel 10

### Pre-emergente Herbizid-Wirkung

Im Gewächshaus wird unmittelbar nach der Einsaat der Versuchspflanzen in Saatschalen die Erdoberfläche mit einer wäßrigen Dispersion der Wirkstoffe, erhalten aus einem 25%igen Emulsionskonzentrat, resp. aus einem 25%igen Spritzpulver mit Wirkstoffen, die wegen ungenügender Löslichkeit nicht als Emulsionskonzentrat hergestellt werden können, behandelt. Die Saatschalen werden im Gewächshaus bei 22—25°C und 50—70% relativer Luftfeuchtigkeit gehalten und der Versuch nach 3 Wochen ausgewertet.

Die Verbindungen der Formel I zeigten in diesem Versuch bei Aufwandmengen von 4 kg AS/ha eine gute Herbizidwirkung gegen die geprüften monokotylen und dikotylen Unkräuter.

### Beispiel 11

### Post-emergente Herbizid-Wirkung (Kontaktherbizid)

Eine Anzahl Unkräuter, sowohl monokotyle wie dikotyle, wurden nach dem Auflaufen (in 4- bis 6-Blattstadium) mit einer wäßrigen Wirkstoffdispersion in einer Dosierung von 4 kg Wirksubstanz pro Hektar auf die Pflanzen gespritzt und diese bei 24°—26°C und 45—60% relativer Luftfeuchtigkeit gehalten. Mindestens 15 Tage nach der Behandlung wird der Versuch ausgewertet und das Ergebnis nach folgender Notenskala bonitiert:

1 = Pflanzen total abgestorben
2—3 = sehr starke Wirkung
4—6 = mittlere Wirkung
7—8 = geringe Wirkung
9 = keine Wirkung (wie unbehandelte Kontrolle)

Post-emergente Wirkung

Aufwandmenge: 4 kg Wirksubstanz/Hektar

| Verb. Nr. | Avena | Setaria | Lolium | Solanum | Sinapis | Stellaria |
|---|---|---|---|---|---|---|
| 1 | 1 | 2 | 2 | 2 | 2 | 2 |
| 2 | 3 | 2 | 3 | 2 | 2 | 3 |
| 3 | 2 | 1 | 2 | 2 | 1 | 2 |

### Beispiel 12

### Stimulation des Wurzelwachstums

Samen der Hartweizensorte »Raineri« werden mit einer Suspension des Wirkstoffs behandelt. Die Aufwandmengen betragen zwischen 4 und 1670 mg Wirkstoff pro kg Saatgut. Danach werden die Samen in sterilisierte Erde für 9 Tage in einer Klimakammer bei 15—20°C und 75% relativer Luftfeuchtigkeit kultiviert. Anschließend werden zur Auswertung die Wurzellänge und das Wurzeltrockengewicht der Keimlinge im Vergleich zu unbehandeltem Kontrollsaatgut bestimmt.

In diesem Versuch bewirkten die Verbindungen der Formel I oder Ia und deren Salze eine Erhöhung des Wurzelwachstums sowohl in der Länge als auch im Gewicht um mindestens 10%.

**Patentansprüche**

1. N-Phosphonomethylglycylhydroxamsäure der Formel I

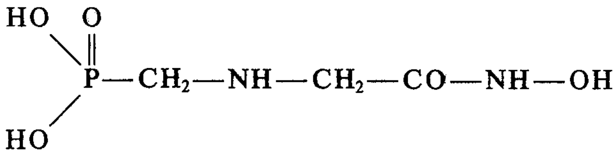

(I)

und/oder der tautomeren Formel Ia

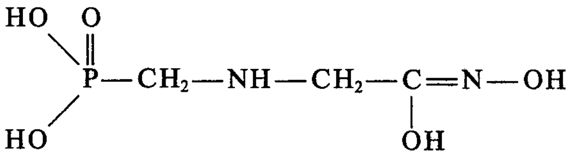

(Ia)

und ihre Salze mit starken Säuren, organischen Stickstoffbasen, Alkali- oder Erdalkalimetallionen und Komplexsalze mit Aluminium oder Schwermetallverbindungen.

2. Verbindungen gemäß Anspruch 1, dadurch gekennzeichnet, daß sie als freie Säure, mono-, di- oder tri-Natriumsalze, Kupfersalz, Isopropylammoniumsalz, Tetrabutylammoniumsalz, 4-Pyrrolidinium-pyridiniumsalz, 1-Methyl-4,4'-bipyridiniumsalz, Dimethyl-benzylammoniumsalz, Dimethyldodecylammoniumsalz oder als Hydrohalogenide vorliegen.

3. Verbindungen gemäß Anspruch 1, dadurch gekennzeichnet, daß sie als freie Säure, mono- oder di-Natriumsalz, Kupfersalz, Isopropylammoniumsalz oder als Hydrohalogenide vorliegen.

4. Die Verbindung N-Phosphonomethylglycylhydroxamsäure, gemäß Anspruch 1.

5. Das Mono-Natriumsalz der N-Phosphonomethylglycylhydroxamsäure, gemäß Anspruch 1.

6. Das Di-Natriumsalz der N-Phosphonomethylglycylhydroxamsäure, gemäß Anspruch 1.

7. Das Hydrochlorid der N-Phosphonomethylglycylhydroxamsäure, gemäß Anspruch 1.

8. Das Kupfersalz der N-Phosphonomethylglycylhydroxamsäure, gemäß Anspruch 1.

9. Das Isopropylammoniumsalz der N-Phosphonomethylglycylhydroxamsäure, gemäß Anspruch 1.

10. Verfahren zur Herstellung von N-Phosphonomethylglycylhydroxamsäure der Formel I oder Ia und ihrer Salze, gemäß Anspruch 1, dadurch gekennzeichnet, daß man

a) eine N-Phosphonomethylglycinverbindung der Formel II

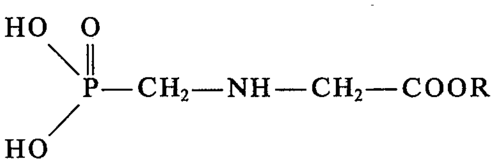

(II)

worin R Wasserstoff oder $C_1-C_4$-Alkyl bedeutet in Gegenwart einer Base mit Hydroxylamin der Formel III,

$$H-O-NH_2 \quad \text{(III)}$$

umsetzt, oder

b) Glycylhydroxamsäure der Formel IV,

$$H-O-NH-CO-CH_2-NH_2 \quad \text{(IV)}$$

in Gegenwart von Salzsäure oder Bromwasserstoffsäure mit Formaldehyd und phosphoriger Säure erhitzt, oder

c) Glycylhydroxamsäure der Formel IV, in Gegenwart eines säurebindenden Mittels mit einer Halogenmethylphophonsäure der Formel V

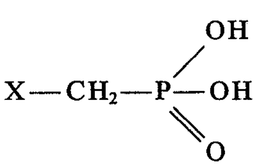

(V)

umsetzt, worin X Chlor oder Brom bedeutet, oder

d) ein Halogenid der Formel VI

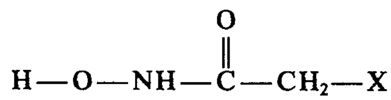

(VI)

worin X Chlor oder Brom bedeutet, in Gegenwart eines säurebindenden Mittels mit Aminomethylphosphonsäure der Formel VII

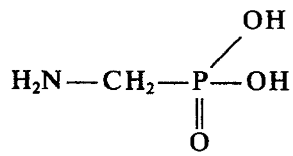

(VII)

umsetzt, oder

e) die phosphonige Säure der Formel VIII

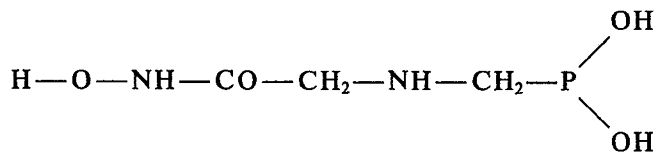

(VIII)

mit Quecksilber-II-chlorid $HgCl_2$ oder Sauerstoff oxidiert, oder

f) ein Hexahydrotriazin der Formel IX

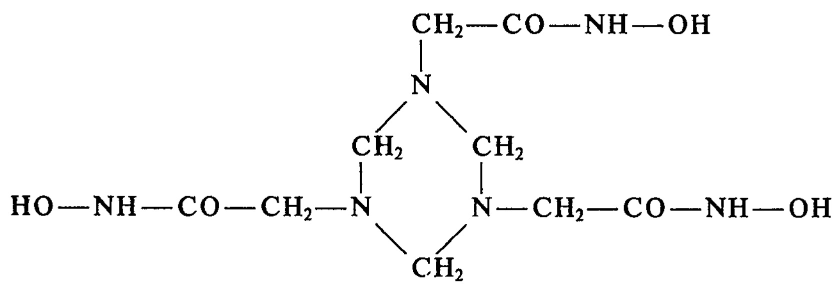

(IX)

mit Dialkylphospiten der Formel X

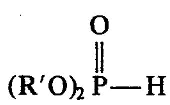

(X)

erhitzt und die entstehenden Phosphonsäureester der Formel XI,

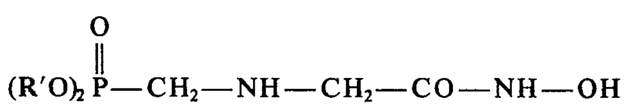

(XI)

worin R' $C_1-C_4$-Alkyl bedeutet, hydrolysiert, oder

g) ein Aminosäurederivat der Formel XII

$$H-O-NH-CO-CH_2-NH-R'' \qquad (XII)$$

worin R'' Benzyl, Benzhydryl oder Triphenylmethyl ist, in Gegenwart von Salzsäure oder Bromwasserstoffsäure mit Formaldehyd und phosphoriger Säure oder Phosphortrichlorid erhitzt und nach beendigter Umsetzung die Gruppe R'' entweder mit Bromwasserstoffsäure bei erhöhter Temperatur (140—180°C) oder mit Wasserstoff in Gegenwart von katalytischen Mengen 5%iger Palladium-Kohle wieder abspaltet, und die entstandene freie Säure gegebenenfalls nach an sich bekannten Methoden in die Salze überführt.

11. Herbizides oder pflanzenwuchsregulierendes Mittel, dadurch gekennzeichnet, daß es als

Wirkstoff mindestens eine Verbindung gemäß Anspruch 1, zusammen mit Träger- und gegebenenfalls weiteren Zuschlagstoffen enthält.

12. Herbizides Mittel gemäß Anspruch 11, dadurch gekennzeichnet, daß es als Wirkstoff eine Verbindung gemäß einem der Ansprüche 2 bis 9 enthält.

13. Herbizides Mittel, gemäß einem der Ansprüche 11 oder 12, dadurch gekennzeichnet, daß es als einen Zuschlagstoff ein anorganisches Salz enthält.

14. Verwendung der Verbindung gemäß einem der Ansprüche 1 bis 9 oder sie enthaltender Mittel zur post-emergenten Bekämpfung von unerwünschtem Pflanzenwuchs.

15. Verwendung der Verbindungen gemäß einem der Ansprüche 1 bis 9 oder sie enthaltender Mittel zur Förderung des Wurzelwachstums bei Getreidepflanzen.

**Claims**

1. A N-phosphonomethylglycylhydroxamic acid of the formula I

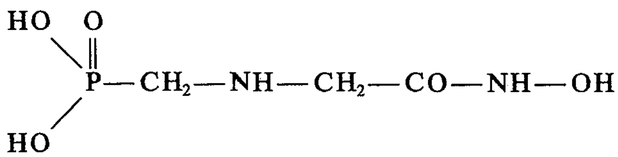

(I)

and/or of the tautomeric formula Ia

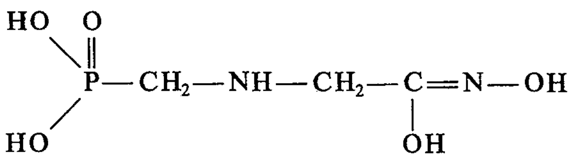

(Ia)

or a salt thereof with a strong acid, an organic nitrogen base, an alkali metal ion or an alkaline earth metal ion, or a complex salt with aluminium or a heavy metal compound.

2. A compound according to claim 1 in the form of the free acid, the mono-, di- or trisodium salt, the copper salt, the isopropylammonium salt, the tetrabutylammonium salt, the 4-pyrrolidinium-pyridinium salt, the 1-methyl-4,4'-bipyridinium salt, the dimethylbenzylammonium salt, the dimethyldodecylammonium salt, or of a hydrohalide.

3. A compound according to claim 1 in the form of the free acid, the mono- or disodium salt, the copper salt, the isopropylammonium salt, or of a hydrohalide.

4. N-phosphonomethylglycylhydroxamic acid according to claim 1.

5. The monosodium salt of a N-phosphonomethylglycylhydroxamic acid according to claim 1.

6. The disodium salt of a N-phosphonomethylglycylhydroxamic acid according to claim 1.

7. The hydrochloride of a N-phosphonomethylglycylhydroxamic acid according to claim 1.

8. The copper salt of a N-phosphonomethylglycylhydroxamic acid according to claim 1.

9. The isopropylammonium salt of a N-phosphonomethylglycylhydroxamic acid according to claim

10. A process for the production of a N-phosphonomethylglycylhydroxamic acid of the formula I or Ia, or of a salt thereof, which process comprises

a) reacting a N-phosphonomethylglycine compound of the formula II

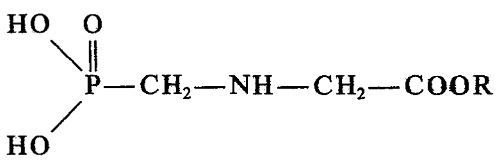

(II)

wherein R is hydrogen or $C_1-C_4$-alkyl, with hydroxylamine of the formula III

$$H—O—NH_2 \qquad (III)$$

in the presence of a base, or

b) heating a glycylhydroxamic acid of the formula IV

$$H—O—NH—CO—CH_2—NH_2 \qquad (IV)$$

with formaldehyde and phosphorous acid, in the presence of hydrochloric acid or hydrobromic acid, or

c) reacting a glycylhydroxamic acid of the formula IV with a halomethylphosphonic acid of the formula V

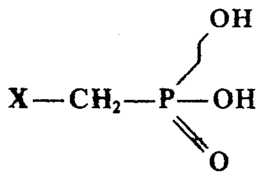

(V)

wherein X is chlorine or bromine, in the presence of an acid acceptor, or

d) reacting a halide of the formula VI

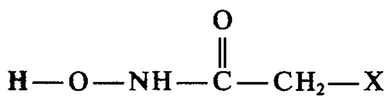

(VI)

wherein X is chlorine or bromine, with an aminomethylphosphonic acid of the formula VII

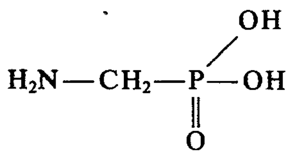

(VII)

in the presence of an acid acceptor, or

e) oxidising the phosphonus acid of the formula VIII

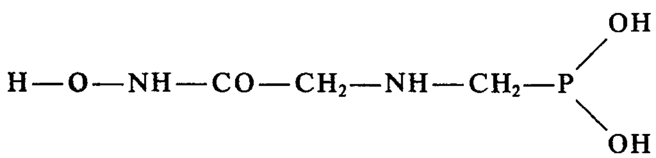

(VIII)

with mercury (II) chloride ($HgCl_2$) or oxygen, or

f) heating a hexahydrotriazine of the formula IX

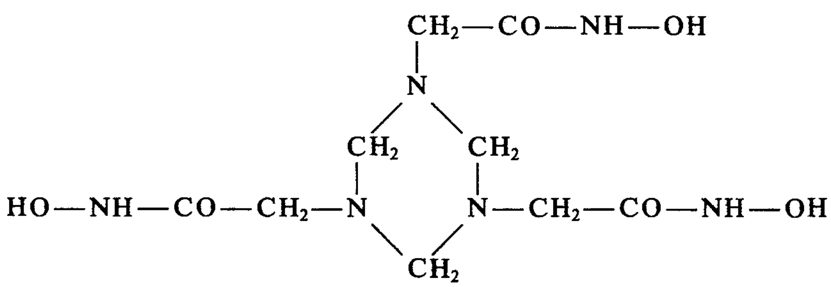

(IX)

with a dialkylphosphite of the formula X

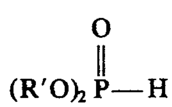

(X)

and hydrolysing the resultant phosphonic acid ester of the formula XI

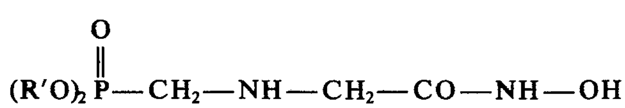

(XI)

wherein R′ is $C_1-C_4$ alkyl, or

g) heating an amino acid derivate of the formula XII

$$H—O—NH—CO—CH_2—NH—R''$$ (XII)

wherein R" is benzyl, benzhydryl or triphenylmethyl, with formaldehyde and phosphorous acid or phosphorous trichloride, in the presence of hydrochloric acid or hydrobromic acid, and, when the reaction is complete, removing the group R" either with hydrobromic acid at elevated temperature (140° — 180° C) or with hydrogen in the presence of catalytic amounts of 5% palladium on carbon and, if desired, converting the resultant free acid by methods which are known per se into a salt.

11. A herbicidal or plant growth-regulating composition which contains an effective amount of at least one compound according to claim 1, together with carriers and/or further adjuvants.

12. A herbicidal composition according to claim 11 which contains an effective amount of a compound according to any one of claims 2 to 9.

13. A herbicidal composition according to either of claims 11 or 12, which contains an inorganic salt as adjuvant.

14. A method of controlling unwanted plant growth, which comprises applying postemergence thereto a herbicidally effective amount of a compound according to any one of claims 1 to 9.

15. A method of promoting the root growth of cereal plants, which comprises applying preemergence thereto an effective amount of a compound according to any one of claims 1 to 9 or of a composition containing such a compound.

**Revendications**

1. Acide N-phosphonométhylglycylhydroxamique de formule I

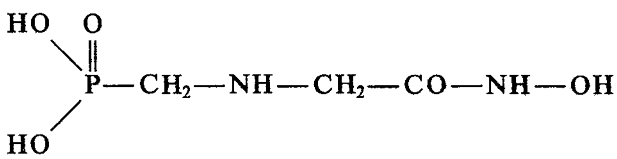

(I)

et/ou de formule tautomère Ia

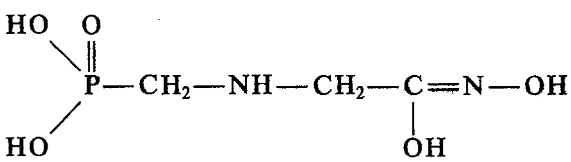

(Ia)

et ses sels avec des acides forts, des bases azotées organiques, des ions de métaux alcalins ou alcalino-terreux et sels complexes avec l'aluminium ou des composés de métaux lourds.

2. Composés selon la revendication 1, caractérisés en ce qu'ils se présent sous forme d'acide libre, de sels mono-, di- ou tri-sodiques, de sel de cuivre, de sel d'isopropyl-ammonium, de sel de tétrabutyl-ammonium, de sel de 4-pyrrolidinium-pyridinium, de sel de 1-méthyl-4,4'-bipyridinium, de sel de diméthylbenzylammonium, de sel de diméthyl-dodécylammonium ou d'halohydrates.

3. Composés selon la revendication 1, caractérisés en ce qu'ils se présentent sous forme d'acide libre, de sel mono- ou disodique, de sol de cuivre, de sel d'isopropylammonium ou d'halohydrates.

4. Le composé acide N-phosphonométhylglycylhydroxamique selon la revendication 1.

5. Le sel monosodique de l'acide N-phosphonométhylglycylhydroxamique selon la revendication 1,

6. Le sel disodique de l'acide N-phosphonométhylglycylhydroxamique selon la revendication 1.

7. Le chlorhydrate de l'acide N-phosphonométhylglycylhydroxamique selon la revendication 1.

8. Le sel de cuivre de l'acide N-phosphonométhylglycylhydroxamique selon la revendication 1.

9. Le sel d'isopropylammonium de l'acide N-phosphonométhylglycylhydroxamique selon la revendication 1.

10. Procédé de préparation d'acide N-phosphonométhylglycylhydroxamique de formule I ou Ia et de ses sels, selon la revendication 1, caractérisé en ce que,

a) on fait réagir un composé de N-phosphonométhylglycine de formule II

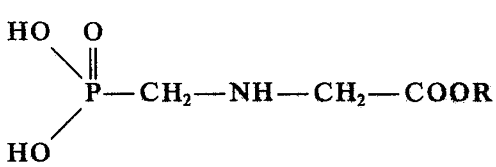

(II)

où R represénte un hydrogène ou un alcoyle en $C_1$ à $C_4$ en présence d'une base avec de l'hydroxylamine de formule III

$H—O—NH_2$ (III)

ou

b) on chauffe de l'acide glycylhydroxamique de formule IV

$H—O—NH—CO—CH_2—NH_2$ (IV)

en présence d'acide chlorhydrique ou d'acide bromhydrique avec du formaldéhyde et de l'acide phosphoreux ou

c) on fait réagir de l'acide glycylhydroxamique de formule IV en présence d'un agent fixant les acides avec un acide halogèneméthylphosphonique de formule V

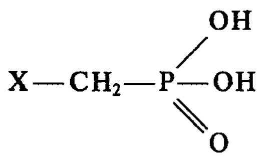
(V)

où X représente un chlore ou un brome, ou

d) on fait réagir un halogénure de formule VI

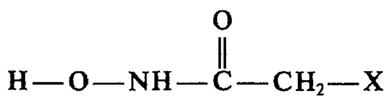
(VI)

où X représente un chlore ou un brome, en présence d'un agent fixant les acides, avec l'acide aminométhylphosphonique de formule VII

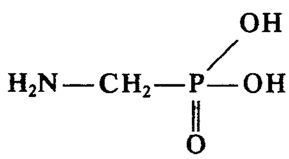
(VII)

ou

e) on oxide l'acide phosphoneux de formule VIII

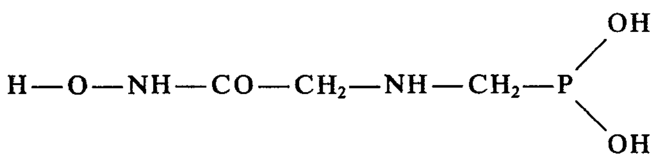
(VIII)

avec du chlorure de mercure-II $HgCl_2$ ou de l'oxygène, ou

f) on chauffe une hexahydrotriazine de formule IX

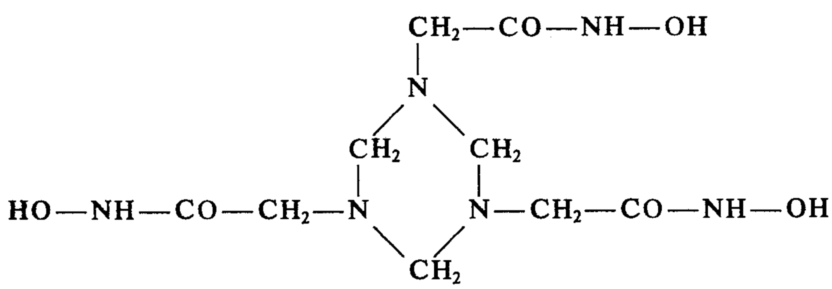
(IX)

avec des dialcoylphosphites de formule X

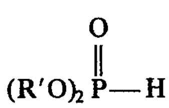
(X)

et on hydrolyse l'ester de l'acide phosphonique de formule XI apparu

$$(R'O)_2\overset{\overset{\displaystyle O}{\|}}{P}—CH_2—NH—CH_2—CO—NH—OH \qquad (XI)$$

où R' représente un alcoyle en $C_1$ à $C_4$, ou

g) on chauffe un dérivé d'acide aminé de formule XII

$$H—O—NH—CO—CH_2—NH—R'' \qquad (XII)$$

où R'' est un benzyle, un benzhydryle ou un triphénylméthyle, en présence d'acide chlorhydrique ou d'acide bromhydrique avec du formaldéhyde et de l'acide phosphoreux ou du trichlorure de phosphore et après la fin de la réaction on sépare à nouveau le groupe R'' soit avec de l'acide bromhydrique à température augmentée (140—180°C) soit avec de l'hydrogène en présence de quantités catalytiques de palladium à 5%-charbon, et on transforme le cas échéant l'acide libre apparu en le sel selon des procédés connus.

11. Agent herbicide ou régulateur de la croissance des plantes, caractérisé en ce qu'il contient comme matière active ou moins un composé selon la revendication 1, avec des supports et éventuellement d'autres additifs.

12. Agent herbicide selon la revendication 11, caractérisé en ce qu'il contient comme matière active un composé selon l'une des revendications 2 à 9.

13. Agent herbicide selon l'une des revendications 11 ou 12, caractérisé en ce qu'il contient comme additif un sel inorganique.

14. Application des composés selon l'une des revendications 1 à 9 ou des agents qui les contiennent à la lutte en post-levée contre la croissance végétale indésirable.

15. Application des composés selon l'une des revendications 1 à 9 ou des agents qui les contiennent pour favoriser la croissance des racines dans les céréales.